# EUROPEAN PATENT APPLICATION

(11) **EP 1 326 364 A1**
(43) Date of publication of application: **09.07.2003**
(21) Application number: 01985309.2
(22) Date of filing: 17.09.2001
(51) Int. Cl.: H04L 9/00

(54) **THE DYNAMIC IDENTIFICATION METHOD WITHOUT IDENTIFICATION CODE---**

(30) Priority: 20.09.2000 CN 00124551
(71) Applicant: Ci, Mengfu, Hunan Province 410009 (CN)
(72) Inventor: Ci, Mengfu, Hunan Province 410009 (CN)
(74) Representative: Reinhard - Skuhra - Weise & Partner
(86) International application number: CN0101401
(87) International publication number: WO02025860

(57) **Abstract**

A fully dynamic authentication method without identifier is disclosed in the present invention. The user's original identification code and authentication code having been encrypted dynamically will be transmitted by the user terminal to the server, and will be decrypted there for identification confirmation. In the authentication method of the invention, the identification code and authentication code are encrypted and decrypted unitedly. The results of each encryption are different from all others and there is no a static identification code or feature to be identified each time the user's identification is authenticated, therefore the hacker would not be able to trace, record and analyze the user's authentication information. Thus actually the cracking object of the hacker has to be changed from the variation law of a single user to those of all users, which provides higher security.

## Description

### Technical Field of the Invention

The present invention involves a fully dynamic authentication without identifier, belongs to the information security field.

### Description of the Related Art

For computer network user authentication, now generally the method of the static identification code (user name and series number etc.), combined with the password (the cryptogram set by the user) is used to confirm the user's identification. Since the static identification code and password in this method remain unchanged during their transmit from the user's terminal to the server for identification authentication, they may be intercepted and captured by a certain hacker in the course of information transmit between the user's terminal and the server and may be utilized by the attacker to imitate an authorized user to beat. Aiming at eliminating this defect in the above static authentication, a new user authentication method has developed based on the above authentication method and the modification from static password to dynamic password (i.e. static identification code + dynamic password). Quite a few products based on this new authentication method have been launched to the market, such as the Dynamic ID card of two-factor authentication based on "cryptographic key - time (event)" provided by the RSA Security Incorporation, which will produce dynamic password automatically on different time for authentication. In fact, any user who uses the dynamic password for authentication will get his dynamic password variation based on a certain rule, and the hacker may makes use of the weakness that the static identification code remains unchanged to follow up and analyze it. He would be able to crack the variation law of the dynamic password and, after capturing enough information, mimic the authorized user to raise attacks.

### Summary of the Invention

The invention is to provide an authentication method that could not be traced and analyzed by the hacker.

The fully dynamic authentication method without identifier of the invention comprises steps: encrypting the user's original identification code and authentication code dynamically in the user terminal to produce a fully dynamic authentication code, transmitting the fully dynamic authentication code to a server, and decrypting the fully dynamic authentication code without identifier in the server for conforming user' identification.

In the authentication method of the invention, The result of each encryption is different from all others and there is no static identification code or feature to be identified each time the user's identification is authenticated, because the identification code and authentication code are encrypted dynamically. Therefore the hacker would not be able to trace, record and analyze the user's authentication information. Thus actually the cracking object of the hacker has to be changed from the variation law of a single user to those of all users, which provides higher security.

### Brief Description of the Drawings

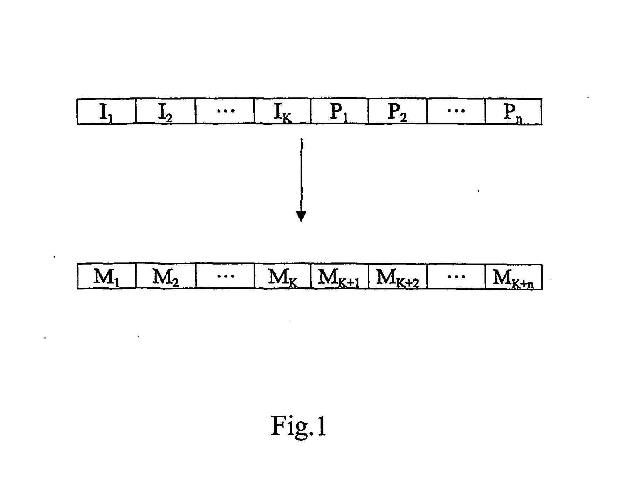

Figure 1 is the schematic diagram of the flow of the above authentication method of the invention.

### Detailed Description of the Preferred Embodiments

As shown in Figure 1, the original codes are composed of identification codes I₁, I₂, ...Iₖ and authentication codes P₁, P₂, ...Pₖ. During an authentication operation, the above original identification codes and authentication codes are encrypted, so that a fully dynamic authentication code (M₁, M₂, ...Mₖ, Mₖ₊₁, Mₖ₊₂,... Mₖ₊ₙ) varying in each authentication is produced, and then the dynamic identification code (M₁, M₂, ...Mₖ, Mₖ₊₁, Mₖ₊₂,... Mₖ₊ₙ) is transmitted to the server. The fully dynamic identification code will be decrypted in the server, so that obtaining the original identification code I₁, I₂, ...Iₖ and the original authentication code P₁, P₂, ...Pₖ therefrom, and the corresponding authentication.

The above encryption course may be set to be carried out by the encryption software or hardware in the user's terminal and any encryption technology may be adopted without any limitation to the encryption method. For instance, the dynamic encryption result may be gotten by varying encryption method in each authentication or by a constant encryption method but varying cryptographic key in each authentication, or even by dynamic encryption method. On the other hand, the fully dynamic authentication code without identifier may be decrypted by the same encryption algorithm system in the server as used in the user's terminal, or by corresponding public cryptographic key in the server while the encryption is done by the private cryptographic key.

The invention is not limited to the above embodiment. The key point of the invention is: both the identification code and the authentication code are transformed into the fully dynamic identification code (both the original identification code and the authentication code do not exist any longer), which is transmitted to the server for authentication. Therefore, those authentication methods only by the remained dynamic identification code without authentication code shall belong to the protective scope of the invention.

## Claims

1. A fully dynamic authentication method without identifier, **characterized in that**, comprising steps: encrypting user's original identification code and authentication code dynamically in the user terminal to produce a fully dynamic authentication code, transmitting the fully dynamic authentication code to a server, and decrypting the fully dynamic authentication code without identifier in the server for conforming user' identification.

2. The fully dynamic authentication method without identifier according to the Claim 1, **characterized in that** a same dynamic encryption algorithm system is adopted in both of the user's terminal for encryption and the server for decryption.
